# EUROPEAN PATENT SPECIFICATION

(11) **EP 2 970 755 B1**
(45) Date of publication and mention of the grant of the patent: **14.11.2018**
(21) Application number: 14770093.4
(22) Date of filing: 18.02.2014
(51) Int. Cl.: C09K 8/72, C07C 309/30, C09K 8/524

(54) **PREVENTION OF SLUDGE FORMATION DURING ACIDIZING PROCEDURES**
VERHINDERUNG DER SCHLAMMBILDUNG WÄHREND EINES ANSÄUERUNGSVERFAHRENS
PRÉVENTION DE LA FORMATION DE BOUE PENDANT DES PROCÉDURES D'ACIDIFICATION

(30) Priority: 15.03.2013 US 201313839281
(43) Date of publication of application: 20.01.2016
(73) Proprietor: Ecolab USA Inc., St. Paul, MN 55102 (US)
(72) Inventor: HILL, Donald G., Sugar Land, Texas 77498 (US)
(74) Representative: Godemeyer Blum Lenze Patentanwälte Partnerschaft mbB - werkpatent
(86) International application number: PCT/US2014/016923
(87) International publication number: WO 2014/149306

(56) References cited:
- US-A- 4 442 014
- US-A- 5 058 678
- US-A- 5 445 221
- US-A- 6 060 435
- US-A1- 2006 040 831
- US-A1- 2009 208 763
- US-B1- 6 192 987

## Description

### BACKGROUND OF THE INVENTION

### 1. Field of the Invention

This disclosure relates generally to an acidizing process used during hydrocarbon production. More particularly, the disclosure relates to a class of surfactants that work synergistically with antisludge additives to minimize precipitation of asphaltenes during an acidizing treatment.

### 2. Description of the Related Art

During the acidizing process, acids such as hydrochloric acid and hydrochloric acid / hydrofluoric acid mixtures are pumped into a hydrocarbon producing well to increase oil and/or gas production. These acids are pumped and injected into the subterranean formation to dissolve formation minerals, such as calcite (CaCO₃) and dolomite (MgCO₃), as well as foreign materials, and thereby improve productivity of the formation. The acid, typically HCl, may contain corrosion inhibitors, corrosion intensifiers, surfactants, iron control additives, and solvents in order to maximize the production of oil and gas from the well.
During typical acidizing procedures, it is common for the acid or its reaction products to form "sludge" that can reduce the effectiveness of the treatment or plug the formation or production equipment. "Sludge" is a generic term used in the industry that encompasses insoluble components that precipitate out of the crude oil upon contact with the acid solution. These insoluble components include asphaltenes, maltenes, resins, paraffins, and other hydrocarbons. For example, when the acid comes into contact with asphaltic oil, the asphaltenes will precipitate and reduce the flow of oil through the flow channels, thereby dramatically reducing production of the oil.

Precipitation of these materials is dramatically aggravated by the presence of ferric iron or Fe³⁺ ions that enter the acid solution through corrosion of oilfield tubulars and equipment or may be produced from the well. Therefore, ferric iron must be reduced prior to pumping the acid into the well.

Patent application US 2006/040831 discloses an acidic composition comprising an aqueous hydrochloric acid solution, a corrosion inhibitor, a cationic surfactant and an anionic surfactant. The preferred cationic surfactant is dimethyl cocoalkyl amine oxide, and a suitable anionic surfactant is dodecylbenzene sulfonic acid (DBSA).

Treatments for the reduction of sludge are thus needed in the industry to maintain oil and gas production from the reservoir.

### BRIEF SUMMARY OF THE INVENTION

The present invention relates to an acidic solution comprising an anti-sludge composition is disclosed, wherein the anti-sludge composition comprises a) a formulated dodecylbenzene sulfonic acid, wherein the formulated dodecylbenzene sulfonic acid comprises from 60% to 70% dodecylbenzene sulfonic acid and a nonionic surfactant; b) an iron reducing agent, wherein the iron reducing agent comprises mercaptoethanol, cupric chloride, and an amine (such as a low molecular weight aliphatic or aromatic amine); c) a corrosion inhibitor; and d) a cationic surfactant. Representative examples of amines used in accordance with this disclosure are monoethanolamine, diethanolamine, morpholein, ethylenediamine, and polyethylene amines.

In another aspect, a method of minimizing precipitation of asphaltenes during an acidizing treatment is disclosed. The method comprises a) adding a formulated dodecylbenzene sulfonic acid to an acidic solution, wherein the formulated dodecylbenzene sulfonic acid comprises from 60% to 70% dodecylbenzene sulfonic acid and a nonionic surfactant; b) adding an iron reducing agent to the acidic solution, wherein the iron reducing agent comprises mercaptoethanol, cupric chloride, and an aliphatic amine; c) adding a corrosion inhibitor to the acidic solution; d) adding a cationic surfactant to the acidic solution; and subsequently e) pumping the acidic solution into a hydrocarbon producing formation.

The foregoing has outlined rather broadly the features and technical advantages of the present disclosure in order that the detailed description that follows may be better understood. Additional features and advantages of the disclosure will be described hereinafter that form the subject of the claims of this application.

### BRIEF DESCRIPTON OF THE SEVERAL VIEWS OF THE DRAWINGS

### DETAILED DESCRIPTION OF THE INVENTION

In certain aspects, the present disclosure provides chemical compositions useful for minimizing or preventing the precipitation of sludge, such as asphaltenes, maltenes, or similar asphaltic components, during an acidizing treatment. Hereinafter, the precipitated asphaltenes, maltenes, similar asphaltic components, resins, paraffins, and other hydrocarbons can be generally referred to as sludge. Thus, the present disclosure provides anti-sludge chemical compositions, which can also be referred to as compositions that prevent or minimize the formation of sludge. Methods for preventing and/or minimizing sludge formation are also disclosed.

In aspects of the present disclosure, the anti-sludge compositions are added to the acid before injecting the acid into the well for treatment. The acid is typically, but not limited to, HCl. In certain aspects, the acid is from about 5% to about 28% HCl. In other aspects, the acid is from about 5% to about 15%. In further aspects, the acid may be about 10% HCl to about 20% HCl, and in other aspects, from about 21% to about 28% HCl. In one particular aspect, the acid is about 28% HCl. The choice of acid is dependent upon the desired application objectives for matrix acidizing or perforation clean out for fracturing applications.

Moreover, the difficulty in controlling sludge precipitation is dependent upon the acid strength. Controlling sludge in 28% HCl is typically more difficult than controlling sludge in 15% HCl. In certain aspects, the additives included in the anti-sludge composition can be the same whether a 28% HCl solution is used or a 15% HCl solution is used, but with the stronger acids, higher concentrations of components may be needed.

In certain aspects, the anti-sludge composition can include a formulated dodecylbenzene sulfonic acid (DDBSA) product. The dodecyl alkyl group in DDBSA can be linear or branched. In one aspect, the DDBSA is formulated with a nonionic surfactant (hereinafter "DDBSA formulation" or "formulated DDBSA"). This DDBSA formulation may interchangeably be referred to as ASA-1 hereinafter, and is a mixture containing about 62% DDBSA and a nonionic surfactant, wherein the nonionic surfactant is ethoxylated C₁₀ - C₁₄ alcohols containing about 5 moles of EO (ethylene oxide). Other suitable DDBSA formulations can contain from about 40% to about 65% DDBSA and a nonionic surfactant, wherein the nonionic surfactant is ethoxylated C₁₀ - C₁₄ alcohols, such as ethoxylated C₁₀, C₁₁, C₁₂, C₁₃, or C₁₄ alcohols, or any mixture thereof, containing from about 3 to about 9 moles of EO.

The nonionic surfactant aids in the dispersion of the DDBSA in the acid and as such, any nonionic surfactant can be used, so long as it can disperse the DDBSA in the acid. In certain aspects, the DDBSA or DDBSA formulation can be present in the acidic solution in amounts ranging from about 0.3% to about 10%. In some aspects, the DDBSA or DDBSA formulation is present in the acidic solution in an amount ranging from about 0.3% to about 1%, from about .8% to about 2%, from about 1% to about 5%, from about 5% to about 10%, or from about 8% to about 10% of the DDBSA product.

In certain aspects, the anti-sludge composition can also include one or more cationic surfactants. As can be seen in the examples and as described hereinafter, the cationic surfactant has been found to act synergistically with the DDBSA formulation to minimize or eliminate the sludge precipitation. In certain embodiments, a dialkyl or an alkyl/aryl dimethyl quaternary amine is used as the cationic surfactant. In some embodiments, the cationic surfactant can be a dicocoalkyl-dimethyl ammonium chloride. In other embodiments, the cationic surfactant can be a cocoalkyl-benzyldimethylammonium salt. The salt can be a chloride salt or other halide anion or other common anion salts known in the art. Moreover, the cationic surfactant can also be a dehydrogenated tallow quaternary ammonium compound. Other suitable quaternary ammonium compounds are shown in Table 2 in the examples section of the present application.

The anti-sludge composition can include one or more, or any combination of, the foregoing cationic surfactants. In certain aspects, the cationic surfactant included in the anti-sludge composition is one or both of the following cationic surfactants:

| Dicocoalkyl-dimethyl Ammonium Chloride (I) | | Dimethyl-Cocoalkyl-Benzyl Ammonium Chloride (II) |
|---|---|---|
| 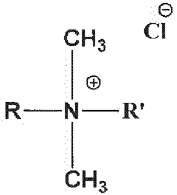 | | 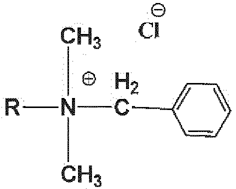 |
| Where R and R' = Cocoalkyl or | | Where R = Cocoalkyl or |
| Where R and R' = Hydrogenated Tallow Alkyl | | Where R = Hydrogenated Tallow Alkyl |

In particular aspects of the present disclosure, the anti-sludge composition includes a product referred to as ASS-1, which is a mixture of about 75% ASS-2, about 10% water, and about 15% ethylene glycol. ASS-2 is a mixture including about 93% dimethyl-cocoalkyl-benzyl ammonium chloride (as shown above as compound II) and about 7% methanol. Other applicable quaternary surfactants include dimethyl-hydrogenated tallow-alkyl- benzyl ammonium chloride (75%) in isopropanol solvent. The percentage of solvent may be up to 50% with the percent quaternary compound would be the balance of the product formulation. These solvents are added to reduce the viscosity of the mixture, subsequently easier handling.

As can be seen in the examples disclosed herein, unexpected synergism has been found with many combinations of components in the anti-sludge compositions, such as synergistic performance with dimethyl-cocoalkyl-benzyl ammonium chloride (DMCB) and the DDBSA formulation to eliminate asphaltic sludge. Thus, in certain aspects of the present disclosure, the anti-sludge composition comprises a cationic surfactant, such as ASS-1, and the DDBSA formulation. In general, the anti-sludge composition can include an equal concentration of the DDBSA formulation and ASS-1 and in other aspects; the anti-sludge composition can include a higher concentration of ASS-1.

In certain aspects, the cationic surfactant can be a quaternary amine such as fatty-alkyl-benzyl dimethylammonium salts. With respect to these additives, applicable chain lengths can be from about C₁₂ to C₂₂ amines, such as C₁₂ to C₁₄ amines, C₁₅ to C₁₇ amines, or C₁₈ to C₂₂ amines. Alternate fatty alkyl amines that may be applicable are shown in Table 1. These fatty amines may be mixtures of fatty amines to provide a single alky ammonium compound. In one embodiment, the additive is dimethlyamine ammonium chloride. Any combination or mixture of these fatty-alkyl amines is also applicable. Representative fatty amines that can be used as the additive include coco, soya, tallow, hydrogenated tallow, and rapeseed amines.

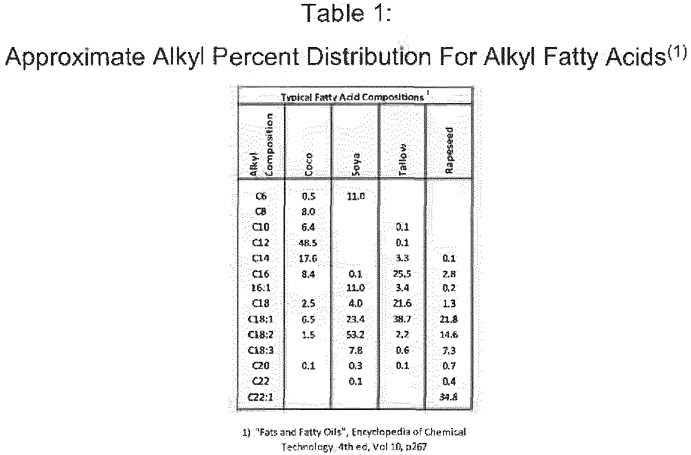

In some aspects of the present disclosure, the amine additive has two fatty alkyl chains and two short chains, such as methyl, ethyl, propyl, or butyl. Diethyl or dipropyl ammonium compounds are also applicable.

In certain aspects, the anti-sludge composition can include additives, such as iron reducers, solvents, surfactants, and chelants. These additives may help to maintain solubility or disperse the asphaltenes in the oil and prevent precipitation thereof. Illustrative, non-limiting examples of such additives are listed below in Table 2, along with representative concentrations. Any of these additives can be included in the anti-sludge composition alone, or in some aspects, certain combinations of these additives can be included in the anti-sludge composition. For example, the anti-sludge composition can further comprise a corrosion intensifier to enhance the performance of the corrosion inhibitor to provide acid corrosion inhibition of oilfield steels at higher temperatures. These concentrations can be dependent upon the strength of the acid, as well as the temperature of the well. When optimum concentrations of chemical additives are used in certain ratios, precipitation of the asphaltic sludge is prevented when the acid intermixes with the oil.

**Table 2: Typical Acidizing Additives used for Acidizing Applications with HCl Fluids**

| **Function** | **Additive** | **Chemical ID** | **Concentration Range** | **Product Objective** |
|---|---|---|---|---|
| **Iron Reducer** | IR-1 | Mixture of mercaptoethanol with cupric chloride, monoethanol amine, and ethyloctanol | 0.6% to 2.0% | Reduce ferric iron (Fe⁺³) to ferrous iron (Fe⁺²) |
| **Intensifier** | KI | Potassium Iodide (solid) | 2 to 20 lb/1000 gal acid | Corrosion Intensifier and Booster for the iron reduction |
| **Intensifier** | Formic Acid | Formic Acid (90%) | Up to 8% | Corrosion Intensifier |
| **Corrosion Inhibitor** | ACl-1 | Mixture of alkylquinolinium chloride with acetylenic alcohols, solvents & surfactants | 0.1% up to 2.0% | Inhibit HCI Corrosion |
| **Corrosion Inhibitor** | ACl-2 | Mixture of phenylvinylketon es with acetylenic alcohols, solvents and surfactants | 0.1% up to 2.0% | Inhibit HCl Corrosion |
| **Surfactant** | WS | Nonionic surfactant mixture in alcohol solvent | 0 up to 0.5% | Acid Flow-back Surfactant and Wetting Agent |
| **Mutual Solvent** | EGMBE | Ethylene glycol monobutylether | Up to 10% | Acid Clean-up Solvent |
| **Mutual Surfactant** | MS | Nonionic surfactant mixture in alcohol solvent | Up to 5% | Acid Clean-up Surfactant |
| **Anti-sludge Additive** | ASA-1 | A mixture of DDBSA with nonionic surfactant | Up to 4% | Prevent Sludge Formation and Precipitation |
| **Antisludge Surfactant*** | ASS-1 | A mixture of cationic surfactant DMCB in methanol and ethylene glycol and water | Up to 1.5% | Prevent Sludge Precipitation |

In certain aspects, the anti-sludge composition includes an iron reducing agent. The concentration of the iron reducing agent in the anti-sludge can vary and is dependent upon the amount of ferric iron present. For example, the acidic solution can include from about 0.5% to about 1% of the iron reducing agent for about 1,000 ppm ferric iron. In another aspect, the acidic solution can include from about 1% to about 2% of the iron reducing agent for about 5,000 ppm ferric iron. In certain aspects, the iron reducing agent comprises mercaptoethanol, cupric chloride, and monoethanol amine. The mercaptoethanol in the iron reducing agent can be present in an amount from about 65% to about 80%. For example, in certain aspects, the mercaptoethanol is present in an amount of about 67%, about 71%, about 75%, or about 79%. The cupric chloride in the iron reducing agent can be present in an amount of about 5% to about 15%. For example, in certain aspects, the cupric chloride is present in an amount of about 5%, about 7%, about 10%, or about 12%. The monoethanol amine in the iron reducing agent can be present in an amount from about 10% to about 20%. For example, in certain aspects, the monoethanol amine is present in an amount of about 12%, about 15%, about 18%, or about 20%. The iron reducing agent can also include water or aliphatic alcohols in amounts ranging from 0 to about 5%. In a particular aspect, the iron reducing agent can comprise mercaptoethanol (71.4%), cupric chloride (10.1%), monoethanol amine (15.1%), and ethyloctanol (3.4%). This mixture may be referred to as ASS-1. In other aspects, the iron reducing agent can comprise mercaptoethanol in an amount from about 60% to about 80%, cupric chloride from about 6% to about 12%, monoethanol amine from about 9% to about 18%, and ethyloctanol up to about 5%.

In accordance with certain aspects of the present disclosure, the anti-sludge composition can include the DDBSA formulation, a cationic surfactant, and an iron reducing agent.

In some aspects, the presently disclosed anti-sludge composition can include a corrosion inhibitor. In general, the corrosion inhibitor can be present in the acidic solution in an amount ranging from about 0.1% to about 3.0%. In one aspect, the corrosion inhibitor comprises a mixture of alkylquinolinium chloride with acetylenic alcohols, solvents and surfactants or benzylquinolinium chloride with acetylenic alcohols, solvents, and surfactants. Likewise, methylnaphthyl quinolinium chloride compounds may be used with solvents and surfactants. In another aspect, the corrosion inhibitor comprises a mixture of phenylvinylketones with acetylenic alcohols, solvents, and surfactants. Phenylvinylketones can be the reaction product of acetophenone, formaldehyde, methanol, and acetic acid.

The solvents and surfactants mentioned in the foregoing paragraph are used to keep all components dissolved or dispersed in the product, e.g., a corrosion inhibitor or anti-sludge additive. These solvents and surfactants may or may not be required. The same applies to their application of dispersing asphaltenes in crude oils. Asphaltenes are soluble in aromatic oils but insoluble in aliphatic solvents, such as heptane and dodecane. The dispersion of the asphaltenes is also assisted by the use of surfactants. Likewise, the use of an acceptable surfactant/solvent decreases or eliminates the sludge precipitation and an unacceptable surfactant/solvent increases the amount of sludge formed. Acceptable solvents can be any solvent, or any combination of one or more solvents, selected from the following group and any mixtures thereof: methanol, ethanol, isopropanol, octanol, ethylene glycol, propylene glycol, glycol ethers, e.g., ethylene glycol monobutyl ether (EGMBE), toluene, xylene, various aromatic solvents, and naphtha. In certain aspects, the solvents are mixtures of toluene or xylene with methanol. In other aspects, the solvent is EGMBE.

In accordance with certain aspects of the present disclosure, an acidic solution is provided and the acidic solution comprises an anti-sludge composition. The anti-sludge composition can include the DDBSA formulation, a cationic surfactant, an iron reducing agent, and a corrosion inhibitor. The acidic solution can comprise from about 0.3% to about 10% of the DDBSA formulation. For example, in certain aspects, the DDBSA or DDBSA formulation is present in the acidic solution in an amount ranging from about 0.3% to about 1%, or from about .8% to about 2%, or from about 1% to about 5%, or from about 6% to about 10% of the DDBSA product.

In other aspects, an acidic solution comprises an anti-sludge composition, wherein the anti-sludge composition comprises a) a formulated dodecylbenzene sulfonic acid; b) an iron reducing agent, wherein the iron reducing agent comprises mercaptoethanol, cupric chloride, and monoethanol amine; c) a corrosion inhibitor; and d) a cationic surfactant. The acidic solution can comprise up to about 28% HCl. In some aspects, the acidic solution comprises from about 5% to about 15%. In other aspects, the acid may be about 10% HCl to about 20% HCl, and in further aspects, the acid can be from about 20% to about 28% HCl or from about 25% to about 28% HCl. In further aspects, the acidic solution comprises 28% HCl.

Methods for minimizing sludge formation are also disclosed. In one aspect, a method of minimizing precipitation of asphaltenes during an acidizing treatment is disclosed. The method can comprise the steps of a) adding a formulated dodecyl benzene sulfonic acid to an acidic solution; b) adding an iron reducing agent to the acidic solution, wherein the iron reducing agent comprises mercaptoethanol, cupric chloride, and monoethanol amine; c) adding a corrosion inhibitor to the acidic solution; d) adding a cationic surfactant to the acidic solution; and subsequently e) pumping the acidic solution into a hydrocarbon producing well.

In accordance with any method disclosed herein, the acidic solution can comprise hydrochloric acid (HCl). The acidic solution can comprise from about 5% to about 28% HCl. In some aspects, the acidic solution comprises 15% HCl or from about 15% to about 28% HCl. In other aspects, the acidic solution comprises 20% HCl or from about 20% to about 28% HCl. In further aspects, the acidic solution comprises about 28% HCl.

In accordance with the methods disclosed herein, the acidic solution can comprise about 0.5% to about 10% of the formulated dodecylbenzene sulfonic acid, based on volume of the acidic solution. In accordance with the methods disclosed herein, the acidic solution can comprise about 0.5% to about 2% of the iron reducing agent, based on volume of the acidic solution. In accordance with the methods disclosed herein, the acidic solution can comprise about 0.1% to about 3.0% of the corrosion inhibitor, based on volume of the acidic solution. In accordance with the methods disclosed herein, the acidic solution can comprise about 0.5% to about 10% of the cationic surfactant, based on volume of the acidic solution.

The presently disclosed anti-sludge compositions provide chemical solutions for controlling, preventing, minimizing, or mitigating sludge formation / precipitation, such as asphaltene precipitation, during acidizing applications. The anti-sludge composition allows for improved control of precipitation in higher asphaltic crudes, such as the crude found in the Canadian and Mexican areas. Synergistic combinations of additives have been discovered, as evidenced by the examples provided herein.

Moreover, the presently disclosed anti-sludge composition can be used in applications requiring high oil solubility. Also, due to the cationic nature, these compositions can be used for corrosion inhibition in down-hole applications. The compositions can also be used in the stimulation market for wettability change, and they can also be used as surfactants in oilfield stimulation and treating fluids, such as to adjust the pH of the treating fluid and to provide oil solubility or dispersability for treating chemicals and to reduce interfacial tension to permit the easier flow back of treating fluids. The treating fluid may be an acid stimulating fluid or fracturing fluid.

### EXAMPLES

The experimental procedures employed for the evaluation of different anti-sludge compositions of the present disclosure for acidizing applications is provided below. This procedure is recommended by most oilfield companies to qualify additives for acid stimulation applications. Testing employs an equal volume of a formulated acidizing fluid and crude oil obtained from a producing well that does not contain any additives, such as emulsion breakers or corrosion inhibitors. Typically, about 20 to 25 mL of these fluids are used in each experiment.

With respect to the procedure for sludge formation, about 25 mL of 28% HCl containing 5,000 ppm ferric iron was added to a 4 ounce glass container (jar). The iron was reduced with an iron reducing agent, 1.0% IR-1 which is a mixture of mercaptoethanol (71.4%), cupric chloride (10.1%), monoethanol amine (15.1%), and ethyloctanol (3.4%), as shown above in Table 1. Ethyloctanol is used in this formulation but similar results would be expected if it was replaced with water or any aliphatic alcohol.

Other chemical additives, such as corrosion inhibitors, surfactants, mutual solvents, and antisludge additive (1.5% of ASA-1, which is a mixture containing about 62% DDBSA and a nonionic surfactant) were also added to certain jars in certain experiments, as shown in Tables 2. Varied concentrations of the cationic surfactant additive were added to certain jars in amounts typically ranging from 1.0% to 1.5%.

For each jar tested, the acid was mixed, by vigorous shaking, after the addition of all additives. Next, 25 mL of the acid was added to a 100 mL glass bottle. The crude oil was preheated to 90 °C. Equal volumes of the heated oil were added to the bottle containing the premixed acid. The glass bottle and was then vigorously shaken for one minute and placed in a hot water bath for one hour. Separation of the acid and the oil phases was monitored, but quickly broke within 2-3 minutes. When the optimum quantities of all anti-sludge additives were employed, a clean separation occurred generally providing a clean interface.

To determine the amount of asphaltic solids (sludge), the acid and oil mixture was removed from the bath and quickly filtered through a dry preweighed 100 mesh screen (149µ). The oily residue (precipitated asphaltene sludge) collected on the screen and was thoroughly rinsed with heptane. The excess oil was then removed from the screen by adsorbing excess oil by swabbing the underside of the screen. The screen was then air dried and reweighed. The quantity of residual asphaltic material was determined by weight difference to quantify the amount of asphaltene residue. In addition, quantity was also described by heavy (H), moderate (M), small (S), or none (N), for comparative purposes and pictures of the screen with residue were taken. In order to pass the test, the inventors were looking for no increase in weight and no asphaltene observed on screen. The results can be seen below in Tables 3-10.

**Table 3:**

| **Quaternary Ammonium Compounds Evaluated for Asphaltic Sludge Control** | | | |
|---|---|---|---|
| **Quaternary Ammonium Compound** | **Sludge Weight (g) @ concentration (%)** | | |
| | 1.5% | 1.0% | 0.5% |
| Dimethyl Cocoalkyl Benzyl Ammonium Chloride (ASS-1) - 75% in Ethylene Glycol / Water | 0.008 | | 0.008 |
| Dimethyl Cocoalkyl Benzyl Ammonium Chloride (ASS-2) - 92% in Isopropanol | 0.008 | | |
| Dimethyl-Dicocoalkyl Ammonium Chloride 92% in Methanol | 0.005 | 0.015 | 0.095 |
| | <0.001 | <0.001 | 0.040 |
| Dimethyl-hydroginated Tallow Benzyl Ammonium Chloride 75% in IPA | 0.104 | 0.012 | 0.011 |

| **Quaternary Ammonium Compound** | **Sludge Weight (g) @ Concentration (%)** | | |
|---|---|---|---|
| Dicoco-alkyl-dimethyl Ammonium Chloride 75% in IPA | 0.005 | 0.016 | 0.015 |
| Dihydrogenated Tallow Dimethyl ammonium Chloride 75% in IPA | 0.006 | 0.009 | 0.084 |
| Coco alkyl trimethyl Ammonium Chloride 50% in IPA | 0.095 | 0.084 | |
| Lauryl-benzyl ethoxylated (2) ammonium chloride | 0.149 | 0.143 | 0.133 |
| Cocoalkylmethyl [ethoxylated (2)]-Ammonium Chloride 30% in IPA | 0.362 | 0.338 | |
| Oleylmethyl [ethoxylated (2)]-Ammonium Chloride 30% in IPA | 0.2025 | 0.257 | |

**Table 4:**

| **Synergistic Performance of ASS-1 (DMCB product) with ASA-1 (DDBSA product) in 28% HCL to Eliminate Asphaltic Sludge** | | | |
|---|---|---|---|
| **Field: Judy Creek Formation: Swan Hills** | | | |
| **Location: Alberta, Canada** | | | |
| **Anti-Sludge Additive (Conc. %)** | | **Sludge Content** | |
| ASS-1 Surfactant | ASA-1 Product | Weight (g) | Visual |
| 0 | 1.5 | 0.397 | vH |
| 0.5 | 1.5 | 0.042 | H |
| 0.75 | 0.75 | 0.037 | M |
| 1 | 1 | 0.016 | M |
| 1 | 1.5 | 0.034 | M |
| 1 | 2 | 0.006 | N |
| 1.5 | 0 | 0.157 | mH |
| 1.5 | 0.5 | 0 | N |
| 1.5 | 1 | 0.003 | N |
| 1.5 | 1.5 | 0.003 | N |
| 2 | 0.5 | 0 | N |
| 2 | 1 | 0.006 | N |

**Table 5:**

| **Effect of Reducing Agents to Control Ferric Ion Concentrations With Anti-sludge Additive Containing the DDBSA Formulation and ASS-1 (AS Surfactant) in 28% HCL** | | | | | |
|---|---|---|---|---|---|
| **Iron Reducing Agents** | | | **Anti-Sludge Additives** | | **Sludge Content** |
| Product | Conc. | CUCl₂-2H₂O | ASA-1 | ASS-1 | Weight |
| Sodium Erythrobate | 1.0% | -- | 1.5% | 0% | 0.438 g |
| | 1.0% | 0.12g | 1.5% | 0% | 0.424g |
| 1.0% | 1.0% | 0.12% | 1.5% | 1.5% | 0.080g |
| Ammonium Thioglycolate | 1.0% | -- | 1.5% | 0% | 0.384 |
| | 1.0% | 0.12% | 1.5% | 1.5% | 0.3788 |
| | 1.0% | 0.12g | 1.5% | 0% | 0.027 |
| Sodium Formaldehyde Sulfoxylate | 1.0% | -- | 1.5% | 0% | 0.381 |
| | 1.0% | 0.12% | 1.5% | 1.5% | 0.345 |
| | 1.0% | 0.12g | 1.5% | 0% | 0.129 |
| IR-1 | 1.25% | -- | 1.5% | 1.5% | <0.001 |

**Table 6:**

| **Effect of Anti-sludge Surfactant with Mutual Solvents and in 28% HCL to Eliminate Asphaltic Sludge** | | | | | |
|---|---|---|---|---|---|
| **Field: Judy Creek** | | | | | |
| **Formation: Swan Hills** | | | | | |
| **Location: Alberta, Canada** | | | | | |
| **Acid System Components** | | | | **Observations** | |
| Iron Reducer IR-1 | Mutual Solvent EGMBE | Antisludg e ASA-1 | Antisludge Surfactant (ASS-1) | Sludge wt (g) | Sludge Visual |
| 1.25% | 7.5% | 1.25% | 0.75% | 0 | None |
| 1.25% | 7.5% | 1.25% | 1.0% | 0 | None |
| 1.25% | 7.5% | 1.25% | 1.25% | 0 | None |
| 1.25% | 5.0% | 1.25% | 0.75% | 0 | None |
| 1.25% | 3.0% | 1.25% | 0.75% | 0.005 | Trace |
| 1.50% | 7.5% | 1.25% | 0.75% | ∼0 | Vs Trace |
| 1.75% | 7.5% | 1.25% | 0.75% | ∼0 | Trace |
| 1.25% | 7.5% | 1.25% | 1.0% | 0 | None |
| 1.25% | 7.5% | 1.25% | 1.0% | 0 | None |

**Table 7:**

| **Effect of Anti-sludge Surfactant and Mutual Solvent with Surfactants on Performance Asphaltic Sludge Control** | | | | | |
|---|---|---|---|---|---|
| **Field: Judy Creek** | | | | | |
| **Formation: Swan Hills** | | | | | |
| **Location: Alberta, Canada** | | | | | |
| **Acid System Components** | | | | **Observations** | |
| Mutual Solvent EGMBE | Mutual Surfactant Mixture A | Mutual Surfactant Mixture B | Antisludge Surfactan t (ASS-1) | Sludge wt. (g) | Sludge Visual |
| 7.5% | 0 | 0 | 1.25% | 0.005 | None |
| 5.0% | 0 | 0 | 1.25% | 0.007 | None |
| 2.5% | 0 | 0 | 1.25% | 0.0013 | None |
| 0% | 0 | 0 | 1.25% | 0.0049 | None |
| 0% | 3.0% | 0 | 1.25% | 0.052 | Moderat e |
| 0% | 2.0% | 0 | 1.25% | 0.0059 | None |
| 0% | 1.0% | 0 | 1.25% | 0.029 | Moderat e |
| 0% | 0.5% | 0 | 1.25% | 0.023 | Moderat e |
| 0% | 0 | 2.0% | 1.25% | 0.0049 | None |
| 0% | 0 | 1.0% | 1.25% | 0.0043 | None |

Surfactant mixture A is mixture of C₁₁ alcohols with 7-9 ethylene glycol units, with butanol, EGMBE and water. Surfactant mixture B is a mixture ethoxylated C₆ to C₈ alcohols (50%) in isopropanol. There are many surfactants known in the art to be similar to these surfactants that are intended to be covered by the present disclosure.

**Table 8:**

| **Effect of Anti-sludge Surfactant and Mutual Solvent with Surfactants on Performance Asphaltic Sludge Control** | | | | | | | | |
|---|---|---|---|---|---|---|---|---|
| **Field: Judy Creek** | | | | | | | | |
| **Formation: Beaverhill Lake** | | | | | | | | |
| **Location: Alberta, Canada** | | | | | | | | |
| IR-1 | ACl-2 | EGMBE | ASA-1 | Methanol | Toluene | Xylene | ASS-1 | Sludge* |
| 1.25% | 0.6% | 7.5% | 1.5% | 2.00% | 0.75% | none | 0.75% | Trace |
| 1.25% | 0.6% | 7.5% | 1,5% | 2.00% | 0.75% | none | 1.0% | None |
| 1.25% | 0.6% | 7.5% | 1.5% | 2.00% | 0.75% | none | 1.25% | None |
| 1.25% | 0.6% | 7.5% | 1.5% | 2.00% | 0.75% | none | none | Heavy Sludge |

**Table 9:**

| **Effect of Anti-sludge Surfactant and Mutual Solvent with Surfactants on Control of Asphaltic Sludge Control (Red Deer, AB, CA Test)** | | | | | | | | |
|---|---|---|---|---|---|---|---|---|
| **Field: House Mountain** | | | | | | | | |
| **Formation: Swan Hills** | | | | | | | | |
| **Location: Alberta, Canada** | | | | | | | | |
| IR-1 | ACl-2 | EGMBE | ASA-1 | Methanol | Toluene | Xylene | ASS-1 | Sludge* |
| 1.25% | 0.6% | 7.5% | 1.5% | 2.00% | 0.75% | none | 0.75% | None |
| 1.25% | 0.6% | 7.5% | 1.5% | 2.00% | 0.75% | none | 1.0% | None |
| 1.25% | 0.6% | 7.5% | 1.5% | 2.00% | 0.75% | none | 1.25% | None |
| 1.25% | 0.6% | 7.5% | 1.5% | 2.00% | 0.75% | none | none | Heavy Sludge |

**Table 10:**

| **Effect of Anti-sludge Surfactant and Mutual Solvent with Surfactants on Control of Asphaltic Sludge (Sugar Land, TX Test)** | | | | | | | | |
|---|---|---|---|---|---|---|---|---|
| **Field: House Mountain** | | | | | | | | |
| **Formation: Swan Hills** | | | | | | | | |
| **Location: Alberta, Canada** | | | | | | | | |
| IR- | ACl-2 | EGMBE | ASA-1 | Methanol | Toluene | Xylene | ASS-1 | Sludge* |
| 1.25% | 0.6 | 7.5 | 1.5 | 2.00% | 0.75% | non | 0.75% | Non |
| 1.25% | 0.6 | 7.5 | 1.5 | 2.00% | 0.75% | non | 1.0% | Non |
| 1.25% | 0.6 | 7.5 | 1.5 | 2.00% | 0.75% | non | 1.25% | Non |
| 1.25% | 0.6 | 7.5 | 1.5 | 2.00% | 0.75% | non | none | Heavy Sludge |

As can be seen from the data depicted herein, all aspects of the presently disclosed anti-sludge compositions and acidic solutions comprising various anti-sludge compositions performed well in the reduction, minimization, mitigation, or prevention of sludge formation including minimizing precipitation of asphaltenes during acidizing treatments.

All of the compositions and methods disclosed and claimed herein can be made and executed without undue experimentation in light of the present disclosure. While this invention may be embodied in many different forms, there are described in detail herein specific preferred embodiments of the invention. The present disclosure is an exemplification of the principles of the invention and is not intended to limit the invention to the particular embodiments illustrated. In addition, unless expressly stated to the contrary, use of the term "a" is intended to include "at least one" or "one or more." For example, "a device" is intended to include "at least one device" or "one or more devices."

Any ranges given either in absolute terms or in approximate terms are intended to encompass both, and any definitions used herein are intended to be clarifying and not limiting. Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in their respective testing measurements.

Furthermore, the invention encompasses any and all possible combinations of some or all of the various embodiments described herein.

## Claims

1. An acidic solution comprising an anti-studge composition, wherein the anti-sludge composition comprises.
a) a formulated dodecylbenzene sulfonic acid, wherein the formulated dodecylbenzene sulfonic acid comprises from 60% to 70% dodecylbenzene sulfonic acid and a nonionic surfactant;
b) an iron reducing agent, wherein the iron reducing agent comprises mercaptoethanol, cupric chloride, and monoethanol amine;
c) a corrosion inhibitor; and
d) a cationic surfactant.

2. The acidic solution of Claim 1, wherein the nonionic surfactant is selected from the group consisting of ethoxylated C₁₀ - C₁₄ alcohols with up to 5 moles of ethylene oxide.

## Patentansprüche

1. Saure Lösung, umfassend eine Antiaufschlämmungszusammensetzung, wobei die Antiaufschlämmungszusammensetzung Folgendes umfasst:
a) eine formulierte Dodecylbenzolsäure, wobei die formulierte Dodecylbenzolsäure zu 60 % bis 70 % Dodecylbenzolsulfonsäure und ein nichtionisches Tensid umfasst;
b) ein Eisenreduktionsmittel, wobei das Eisenreduktionsmittel Mercaptoethanol, Kupferchlorid und Monoethanolamin umfasst;
c) einen Korrosionshemmer; und
d) ein kationisches Tensid.

2. Saure Lösung nach Anspruch 1, wobei das nichtionische Tensid ausgewählt ist aus der Gruppe bestehend aus ethoxylierten C₁₀-C₁₄-Alkoholen mit bis zu 5 Mol Ethylenoxid.

## Revendications

1. Solution acide comprenant une composition antiboue, la composition antiboue comprenant :
a) un acide dodécylbenzène sulfonique formulé, l'acide dodécylbenzène sulfonique formulé comprenant de 60 à 70 % d'acide dodécylbenzène sulfonique et un tensioactif non ionique ;
b) un agent de réduction du fer, l'agent de réduction du fer comprenant du mercaptoéthanol, du chlorure cuprique et la monoéthanol aminé ;
c) un inhibiteur de corrosion ; et
d) un tensioactif cationique.

2. Solution acide selon la revendication 1, dans laquelle le tensioactif non ionique est sélectionné dans l'ensemble constitué d'alcools en C₁₀₋₁₄ éthoxylés contenant jusqu'à 5 moles d'oxyde d'éthylène.
